# EUROPÄISCHE PATENTANMELDUNG

(11) **EP 4 043 281 A1**
(43) Veröffentlichungstag der Anmeldung: **17.08.2022**
(21) Anmeldenummer: 21156397.8
(22) Anmeldetag: 10.02.2021
(51) Int. Cl.: B60P 7/04, B60P 3/035, B60J 7/08

(54) **NUTZFAHRZEUGAUFBAU UND NUTZFAHRZEUG ZUM TRANSPORTIEREN VON COILS**

(71) Anmelder: Fliegl, Helmut, 07819 Triptis (DE)
(72) Erfinder: Fliegl, Helmut, 07819 Triptis (DE)
(74) Vertreter: Kramer Barske Schmidtchen Patentanwälte PartG mbB

(57) **Zusammenfassung**

Die vorliegende Erfindung betrifft einen Nutzfahrzeugaufbau (1) zum Bedecken eines Laderaums (2) eines Nutzfahrzeugs wie beispielsweise ein Lastkraftwagenanhänger (3), das zum Transportieren wenigstens eines Coils (4) ausgebildet ist, mit einer Stirnwand (5), einer Heckwand (7), einer beweglichen Abdeckung (9) und einer Verdecköffnungsvorrichtung (12). Die Stirnwand (5) weist einen bogenförmigen Randbereich (6) auf. Die Heckwand (7) ist in Längsachsenrichtung des Nutzfahrzeugaufbaus (1) in einem Abstand zu der Stirnwand (5) angeordnet und weist einen eine ähnliche Bogenform wie die Stirnwand (5) aufweisenden bogenförmigen Randbereich (8) auf. Die Verdecköffnungsvorrichtung (12) ist dazu ausgebildet, die bewegliche Abdeckung (9) von einem geschlossenen Zustand (A), bei dem der Laderaum (2) durch die bewegliche Abdeckung (9) abgedeckt ist, in einen offenen Zustand (B), bei dem das wenigstens eine Coil (4) in und aus dem Laderaum (2) bringbar ist, entlang der bogenförmigen Randbereiche (6, 8) zu verschieben. Ferner betrifft die vorliegende Erfindung ein Nutzfahrzeug (3) mit einem Laderaum (2), das zum Transportieren wenigstens eines Coils (4) ausgebildet ist, mit einer im Bereich eines Laderaumbodens (38) angeordneten Aufnahmemulde (35) mit zwei Aufnahmemuldenseitenwänden (37), wobei die Aufnahmemuldenseitenwände (37) nach oben über den Laderaumboden (38) des Laderaums (2) überstehen.

## Beschreibung

### Technisches Gebiet

Die vorliegende Erfindung betrifft einen Nutzfahrzeugaufbau zum Bedecken eines Laderaums eines Nutzfahrzeugs, das zum Transportieren wenigstens eines Coils ausgebildet ist. Ferner betrifft die Erfindung ein Nutzfahrzeug, das zum Transportieren wenigstens eines Coils ausgebildet ist.

### Hintergrund

Im vorliegenden Fall sind unter dem Begriff Nutzfahrzeuge sowohl motorisierte Kraftfahrzeuge, die nach ihrer Bauart und Einrichtung zum Transport von Personen und Gütern oder zum Ziehen von Anhängern bestimmt sind, als auch nicht motorisierte Anhänger zu subsummieren.

Als Coil wird im Folgenden ein aufgewickeltes Bund von Material, wie beispielsweise Stahlrollen (Stahlcoils) oder Papierrollen (Papier-Coils) bezeichnet. Ein einzelnes Coil kann mehrere Tonnen schwer sein. Ein einzelnes Stahlcoil wiegt üblicherweise mehrere Tonnen, beispielsweise 12 Tonnen.

Wird für den Transport derartiger Coils ein Nutzfahrzeug wie beispielsweise ein Sattelanhänger verwendet, muss darauf geachtet werden, dass das zulässige Gesamtgewicht für Straßenfahrzeuge bzw. die zulässige Achsaggregatlast nicht überschritten werden darf sowie die erforderliche Sattellast bzw. Stützlast realisiert wird. Das Leergewicht des Nutzfahrzeugs sowie die Positionierung des Ladeguts spielt daher eine wesentliche Rolle, um das zulässige Ladegewicht für den Transport der Coils zu maximieren

Der für die Abdeckung des Laderaums des Nutzfahrzeugs verwendete Nutzfahrzeugaufbau besteht üblicherweise aus vier rechteckigen Seitenflächen und einer rechteckigen Dachfläche. Die Seitenflächen und die Dachfläche stehen nahezu im rechten Winkel aufeinander. In der Regel werden Planenaufbauten eingesetzt, bei denen wenigstens eine Seitenwand des Planenaufbaus durch eine faltbare Plane geöffnet und verschlossen werden kann bzw. das obere Dach geöffnet werden kann (Beladung via Schiebedach zwischen Aluminiumdachholme). Das Dach wird bei derartigen Planenaufbauten wenigstens teilweise von Rungen getragen, die sich in vertikaler Richtung vom Boden des Planenaufbaus bis zum Dach erstrecken. Dachholme und Dachquerspriegel werden dabei zur Stabilisierung sowie zur Öffnungsoption des Daches verwendet.

Bei den Nutzfahrzeugen für den Transport von Coils befindet sich üblicherweise eine Aufnahmemulde, die sogenannte Coilmulde, im Bodenbereich des Laderaums. In dieser Coilmulde kann das Coil abgelegt werden.

Durch das hohe Gewicht eines Coils kann es bei der Verladung des Coils in den Laderaum eines Nutzfahrzeugs, insbesondere im Bereich des Aufbaus (Kollision mit Schieberungen, Front- bzw. Heckrungen, Seitenplane bei seitlicher Beladung) bzw. Dachaufbaus (Kollision mit Aluminiumdachholmen, Dachquerspriegeln etc.) sowie des Laderaumbodens zu Beschädigungen des Nutzfahrzeugs kommen. Derartige Beschädigungen betreffen beispielsweise die Komponenten des Aufbaus sowie die Rahmenkonstruktion u.a. in Form der Längsträger eines Lastkraftwagenanhängers.

Das der Erfindung zugrunde liegende technische Problem besteht darin, bekannte Nutzfahrzeuge für den Coil-Transport, insbesondere hinsichtlich des Gewichts, der barrierefreien Beladung sowie der Verkehrssicherheit, zu verbessern.

### Zusammenfassung der Offenbarung

Gemäß einem ersten Aspekt der vorliegenden Erfindung wird das der Erfindung zugrunde liegende technische Problem durch einen Nutzfahrzeugaufbau zum Bedecken eines Laderaums eines Nutzfahrzeugs wie beispielsweise ein Lastkraftwagenanhänger, das zum Transportieren wenigstens eines Coils ausgebildet ist, gelöst. Der Nutzfahrzeugaufbau umfasst eine Stirnwand, die einen bogenförmigen Randbereich aufweist, und eine Heckwand, die in Längsachsenrichtung des Nutzfahrzeugaufbaus in einem Abstand zu der Stirnwand angeordnet ist und einen eine ähnliche Bogenform wie die Stirnwand aufweisenden bogenförmigen Randbereich aufweist. Ferner umfasst der Nutzfahrzeugaufbau eine bewegliche Abdeckung, die sich von der Stirnwand bis zu der Heckwand erstreckt und entlang der bogenförmigen Randbereiche führbar ist, und eine Verdecköffnungsvorrichtung, die dazu ausgebildet ist, die bewegliche Abdeckung von einem geschlossenen Zustand, bei dem der Laderaum durch die bewegliche Abdeckung abgedeckt ist, in einen offenen Zustand, bei dem das wenigstens eine Coil in und aus dem Laderaum bringbar ist, entlang der bogenförmigen Randbereiche zu bewegen.

Mit dem erfindungsgemäßen Nutzfahrzeugaufbau ist es möglich, das Gewicht im Vergleich zu bekannten Nutzfahrzeugaufbauten, die bei dem Transport von Coils eingesetzt werden, infolge der technischen Ausgestaltung erheblich zu reduzieren. Mit dem erfindungsgemäßen Nutzfahrzeugaufbau lassen sich Leergewichte von Lastkraftwagenanhängern für den Coil-Transport von unter 4 Tonnen realisieren.

Die bogenförmige Laderaumabdeckung kann beispielsweise kreisbogenförmig oder als Teil einer ovalen Form ausgebildet sein.

Der bogenförmige Randbereich der Heckwand kann die gleiche Bogenform wie der Randbereich der die Stirnwand aufweisen oder eine andere Bogenform aufweisen.

Die bewegliche Abdeckung ist bevorzugt als faltbare Plane, faltbare Folie oder durch faltbare Kunststoffelemente oder Metallelemente ausgebildet. Die bewegliche Abdeckung kann weiterhin als Rollplane bzw. bewegliche Aluminiumlamelle ausgebildet sein.

Weiterhin wird durch die bogenförmige Abdeckung die Verkehrssicherheit in den Wintermonaten infolge einer ausbleibenden Schnee- und Eislast durchgängig gewährleistet. Aufgrund der Bogenform der beweglichen Abdeckung existiert keine oder nur geringe Schneelast bzw. Vereisung auf der Laderaumabdeckung. Auf den Einsatz eines Anti-Ice-Systems bzw. einer Enteisungsleiter und dergleichen kann verzichtet werden.

Gleichzeitig weist der erfindungsgemäße Nutzfahrzeugaufbau eine massive Bauweise mit hoher Betriebsfestigkeit auf. Dies wird dadurch erreicht, dass der erfindungsgemäße Nutzfahrzeugaufbau im Vergleich zu bekannten Nutzfahrzeugaufbauten weniger aufwändig und bauteilintensiv ausgebildet ist. So kann bei dem erfindungsgemäßen Nutzfahrzeugaufbau beispielsweise auf eine Vielzahl von Rungen, auf Dachquerspriegel, auf Aluminium-Dachholme, Einstecklatten, Ladungssicherungsbalken, auf Front- bzw. Hecktüren oder auf Stahl-Schieberungen verzichtet werden.

Mithilfe der Verdecköffnungsvorrichtung kann die bewegliche Abdeckung zwischen einem geschlossenen Zustand und einem offenen Zustand hin- und herverschoben werden. Im offenen Zustand ist die bewegliche Abdeckung so positioniert, dass das Coil in den Laderaum einbringbar ist. Bevorzugt ist der Nutzfahrzeugaufbau so ausgebildet, dass eine Coil-Fahrzeugbeladung via Kran von oben erfolgen kann.

Zum Betreiben der Verdecköffnungsvorrichtung, d.h. zum Verschieben der beweglichen Abdeckung, können elektrische, pneumatische, hydraulische oder rein mechanische Antriebe eingesetzt werden.

Im offenen Zustand wird das Einbringen von Coils in den Laderaum nicht durch Aluminium Dachholme, Dachquerspriegel, Schieberungen oder ein Planenoberdach erschwert. Der Laderaum ist hingegen seitlich sowie nach oben absolut offen. Dadurch kann es nicht zu einer Beschädigung von Komponenten wie einem Dachholm bzw. Führungsschienen der Seitenplanen, Free-Load-System bzw. der zusammengeschobenen (komprimierten) Dachquerspriegel nebst Dachplane etc. kommen.

Ferner kann mit dem erfindungsgemäßen Nutzfahrzeugaufbau der Luftwiderstand des Aufbaus beim Transport im Vergleich zu den bekannten Aufbauten erheblich reduziert werden. Durch die bogenförmige Rahmenfront nebst bogenförmigen, beispielsweise runden oder ovalem Fahrzeugaufbau kann die Aerodynamik deutlich verbessert werden und somit eine Einsparung von Kraftstoffaufwendungen erreicht werden.

Gemäß einer bevorzugten Ausführungsform weist der Nutzfahrzeugaufbau wenigstens eine Verstrebung auf. Die Verstrebung ist in einem Abstand zwischen der Stirnwand und der Heckwand angeordnet und weist einen bogenförmigen Randbereich, der eine ähnliche Bogenform wie die Stirn- und die Heckwand aufweist und entlang dem die bewegliche Abdeckung zusätzlich abgestützt ist, auf.

Die wenigstens eine Verstrebung sorgt für eine zusätzliche Führung der beweglichen Abdeckung. Somit kann beispielsweise ein Durchhängen der beweglichen Abdeckung zwischen der Stirnwand und der Heckwand reduziert werden. Ein kontrolliertes Verschieben der beweglichen Abdeckung zwischen dem geschlossenen Zustand und dem offenen Zustand wird verbessert. Mehrere Verstrebungen sind vorzugsweise gleichmäßig in Längsachsenrichtung zwischen der Stirnwand und der Heckwand ausgerichtet. Bevorzugt weisen die bogenförmigen Randbereiche der Verstrebung, der Stirnwand und der Heckwand die gleiche Bogenform auf.

Die wenigstens eine Verstrebung kann beispielsweise als Steckverbindung von Aluminium-, Stahl-, Kunststoff-, Glasfaser- oder Holz-Streben ausgebildet sein.

Gemäß einer bevorzugten Ausführungsform weist die wenigstens eine Verstrebung eine sich derart in den Laderaum erstreckende Strebe auf, dass diese innerhalb des Laderaums eine Anlage für das wenigstens eine Coil schafft.

Die sich in den Laderaum erstreckende Strebe der wenigstens einen Verstrebung schafft eine Anlagefläche für ein Coil. Die Strebe ist so ausgebildet, dass sie fest mit dem Boden des Laderaums verbindbar ist. Auf diese Weise ist es möglich, die Anlagefläche als zusätzliche Verschiebesicherung für ein Coil innerhalb des Laderaums zu benutzen. Es kann dadurch eine formschlüssige Ladungssicherung erreicht werden. Beispielsweise kann das Coil mit Zurrgurten gegen die Strebe verzurrt werden. Das Coil ist somit gegen Längsbewegung in dem Laderaum gesichert.

Beispielsweise kann die Anlagefläche die Seitenfläche von Stahlsteckrungen sein, die in Aufnahmen in dem Boden des Laderaums einsteckbar sind. Bevorzugt sind der bogenförmige Randbereich der Verstrebung und die sich in den Laderaum erstreckende Strebe miteinander verbunden.

Gemäß einer bevorzugten Ausführungsform weist die Verdecköffnungsvorrichtung einen Schwenkarm und einen Antrieb auf. Der Schwenkarm ist an einem Schwenkarmende mit der beweglichen Abdeckung verbindbar und an einem Schwenkarmkopfbereich drehbar gelagert. Der Antrieb ist mit dem Schwenkarmkopfbereich verbunden und dazu ausgebildet, den Schwenkarm zu drehen und durch die Drehung die bewegliche Abdeckung zwischen dem geschlossenen Zustand und dem offenen Zustand hin und her zu bewegen. Die Verdecköffnungsvorrichtung weist einen Schwenkarm und einen Antrieb im Bereich der Stirnwand und/oder im Bereich der Heckwand auf. Das Schwenkarmende bewegt sich bei Drehung des Schwenkarms entlang des bogenförmigen Randbereichs.

Ein Schwenkarm ist eine einfache und zuverlässige Methode die bewegliche Abdeckung des Laderaums zwischen dem geschlossenen Zustand und dem offenen Zustand zu bewegen. Der Schwenkarm muss dazu nur um eine Achse gedreht werden. Es sind keine translatorischen Bewegungen des Schwenkarms notwendig. Die Verdecköffnungsvorrichtung kann einen Schwenkarm im Bereich der Stirnwand und/oder Heckwand aufweisen oder jeweils einen Schwenkarm im Bereich der Stirnwand und/oder der Heckwand. Der Schwenkarm ist so gelagert, dass sich das Schwenkarmende entlang des bogenförmigen Randbereichs der Stirnwand beziehungsweise der Heckwand bewegt. Im Bereich der drehbaren Lagerung des Schwenkarms ist der Schwenkarm mit einem Antrieb verbunden, mit dem der Schwenkarm gedreht werden kann. Bei der Verwendung von zwei Schwenkarmen können die Antriebe, die mit den Schwenkarmen verbunden sind, so ausgelegt sein, dass sie synchron zueinander laufen können und die bewegliche Abdeckung somit kontrolliert verschieben.

Gemäß einer bevorzugten Ausführungsform ist der Antrieb der Verdecköffnungsvorrichtung ein Zahnstangenantrieb, der durch lineares Verschieben einer Zahnstange über ein mit dem Schwenkarm verbundenes Zahnrad die Drehung des Schwenkarms erzeugt oder bei dem der Antrieb ein Schnecken- oder Kegelradgetriebe aufweist.

Als einfacher und zuverlässiger Antrieb kann ein Zahnstangenantrieb verwendet werden. Die lineare Verschiebung der Zahnstange des Zahnstangenantriebs kann beispielsweise mit einem Zylinder (hydraulisch, pneumatisch, elektrisch etc.), einer Hand-Hydraulikpumpe, einer Elektrohydraulikpumpe, einer Pneumatikpumpe, einem Pneumatikkompressor oder einem manuellen Getriebe realisiert werden. Alternativ kann anstelle des Zahnstangenantriebs beispielsweise auch ein Antrieb verwendet werden, der ein Schnecken- oder Kegelradgetriebe zur Bewegungsausführung des Schwenkarms aufweist.

Das Zahnrad des Zahnstangenantriebs kann beispielsweise in Form eines integral mit dem Schwenkarm verbundenen halben Zahnrads ausgebildet sein.

Gemäß einer bevorzugten Ausführungsform weist die bewegliche Abdeckung einen versteiften Randbereich, der mit der Verdecköffnungsvorrichtung verbunden ist, auf. Ferner weist die Stirnwand und die Heckwand entlang der bogenförmigen Randbereiche einen Gleitstreifen, der dazu ausgebildet ist, dass der versteifte Randbereich der beweglichen Abdeckung darauf gleitbar ist und/oder eine Führungsschiene, die dazu ausgebildet ist, dass der versteifte Randbereich beweglichen Abdeckung darauf führbar ist und/oder eine Seil- oder Kettenführung, die dazu ausgebildet ist, die bewegliche Abdeckung entlang der bogenförmigen Randbereiche zu führen, auf.

Für eine gute Krafteinleitung/Kraftverteilung in die bewegliche Abdeckung bei dem Verschieben der beweglichen Abdeckung durch die Verdecköffnungsvorrichtung kann die bewegliche Abdeckung im Randbereich versteift ausgeführt sein. Eine derartige Versteifung kann beispielsweise mithilfe eines steifen Materials im Randbereich oder durch Verwendung von Seilen, Ketten etc. geschaffen werden. Alternativ kann die bewegliche Abdeckung mit einem Versteifungsglied versehen sein. Beispielsweise kann dies eine Metallstange sein, die von der Stirnwand bis zu der Heckwand mit der beweglichen Abdeckung im Randbereich der beweglichen Abdeckung verbunden ist. Die Verdecköffnungsvorrichtung leitet die Kraft in diesem Bereich in die bewegliche Abdeckung ein. Im Falle einer ausreichenden Steifigkeit der beweglichen Abdeckung kann auch auf eine Versteifung des Randbereichs verzichtet werden.

Für eine kontrollierte Führung und/oder ein reibungsarmes Verschieben der beweglichen Abdeckung bzw. des versteiften Randbereichs können die bogenförmigen Randbereiche der Stirnwand und Heckwand mit Gleitstreifen und/oder Führungsschienen und/oder Seilen und/oder Ketten versehen sein.

Beispielsweise werden Führungsschienen auf dem bogenförmigen Randbereich der Stirnwand und Heckwand befestigt. Die bewegliche Abdeckung ist im versteiften Randbereich mit entsprechenden, in die Führungsschiene eingreifenden Verbindungsgliedern oder Rollen versehen.

Alternativ kann auch eine Verdecköffnungsvorrichtung verwendet werden, bei der die bewegliche Abdeckung mit einer Seil- oder Kettenführung entlang der bogenförmigen Randbereiche geführt wird. Beispielsweise kann eine Seilführung verwendet werden, wie sie derzeit bei den Schiebeverdecken, Model Galoppino von Cramaro zum Einsatz kommen.

Im Stirnbereich und Heckbereich des Nutzfahrzeugaufbaus kann die bewegliche Abdeckung beispielsweise via Überlappung nebst Expanderseil sowie infolge von mehrfach in Abständen in der beweglichen Abdeckung integrierten Aluminiumstangen gesichert werden.

Gemäß einer bevorzugten Ausführungsform weist die wenigstens eine Verstrebung entlang des bogenförmigen Randbereichs einen Gleitstreifen und/oder eine Führungsschiene und/oder eine Seil-/Kettenführung auf.

Wie auf den bogenförmigen Randbereichen der Stirnwand und Heckwand können sich ein Gleitstreifen und/oder Führungsschienen auch in dem bogenförmigen Randbereich der einen oder mehreren Verstrebungen befinden. Dadurch wird die reibungsarme und/oder kontrollierte Führung der beweglichen Abdeckung weiter verbessert.

Gemäß einem weiteren Aspekt der vorliegenden Erfindung wird das der Erfindung zugrunde liegende technische Problem durch ein Nutzfahrzeug mit einem Laderaum, das zum Transportieren wenigstens eines Coils ausgebildet ist, mit einer im Bereich eines Laderaumbodens angeordneten Aufnahmemulde mit zwei Aufnahmemuldenseitenwänden gelöst. Die zwei Aufnahmemuldenseitenwände erstrecken sich schräg nach oben, in entgegengesetzter horizontaler Richtung. Die Aufnahmemuldenseitenwände stehen nach oben über den Laderaumboden des Laderaums mit einem Überstand über.

Mit dem erfindungsgemäßen Nutzfahrzeug wird eine Führung nebst optimierter Aufnahme des Coils bzw. unterschiedlicher Coilgrößen sowie eine verbesserte Krafteinleitung in die gesamte Fahrzeugkonstruktion durch die hervorstehenden Aufnahmemuldenseitenwände bei Einlegen des Coils in die Aufnahmemulde ermöglicht. Die Aufnahmemuldenseitenwände stehen über den Laderaumboden über. Somit wird das Coil während des Beladevorganges durch die beidseitig auskragenden bzw. überstehenden Aufnahmemuldenseitenwände geführt und kann dadurch exakt in der Aufnahmemulde positioniert werden. Infolgedessen wird eine "tiefere" Aufnahmemulde zur verbesserten Aufnahme sowie Ladungssicherung eines tonnenschweren Coils geschaffen.

Ferner kann eine Beschädigung des Nutzfahrzeugs, der Trittflächen, der Aufnahmemulde sowie des Fahrzeugrahmens durch die hervorstehenden Aufnahmemuldenseitenwände reduziert werden. Gleichsam wie ein "Puffer" können die hervorstehenden Aufnahmemuldenseitenwände Verformungsenergie aufnehmen und somit den Boden des Laderaums und die darunter befindlichen Bauteile des Nutzfahrzeugs vor Beschädigung durch das Coil z. B. plastische Deformation durch ein zügiges Ablegen des Coils im Rahmen eines Beladungsvorgangs infolge übermäßiger Krafteinleitung / Krafteinwirkung in die Bauteile des Nutzfahrzeuges bzw. in die Fahrzeugrahmenkonstruktion resultierend aus einer stoßartigen Punktbelastung schützen. Beispielsweise kann es durch ein zu schnell herabgelassenes oder herabfallendes Coil zu einer derartigen Beschädigung kommen.

Die Aufnahmemulde ist so ausgebildet, dass sie derart abdeckbar ist, dass zwischen den überkragenden Enden der Aufnahmemuldenseitenwände eine ebene Auflagefläche entsteht. Auf diese Weise können auch anderweitige Ladegüter als ein Coil transportiert werden. Der sich neben der Aufnahmemulde erstreckende Laderaumboden kann ebenfalls abgedeckt werden, um den Höhenunterschied des Überstands der Aufnahmemuldenseitenwand auszugleichen und über den gesamten Laderaum hinweg eine ebene Bodenfläche zu erhalten.

Gemäß einer bevorzugten Ausführungsform ist die Aufnahmemuldenseitenwand, zumindest bereichsweise, durch einen Obergurt eines Rahmenlängsträgers des Nutzfahrzeugs ausgebildet.

Bevorzugt sind die Obergurte der Rahmenlängsträger mit dem Steg des Rahmenlängsträgers integral ausgebildet, insbesondere verschweißt. Der Obergurt ist dabei schräg gestellt, bzw. gekippt. Bevorzugt bilden die Obergurte den auskragenden Überstand der Aufnahmemuldenseitenwände über den Laderaumboden aus. Infolge dieses Überstands entsteht eine Coilauflage auf dem Rahmenhauptlängsträger. Die Last bzw. die Masse/Gewichtskraft wird direkt in die Rahmenkonstruktion eingeleitet und der zu transportierende Coil stützt sich bevorzugt über den Obergurt auf dem Fahrzeugrahmen ab. Alternativ kann der Obergurt auch lösbar mit dem Steg des Rahmenlängsträgers, beispielsweise in Form einer Steckverbindung, verbunden sein.

Durch die zumindest teilweise Ausgestaltung der Aufnahmemuldenseitenwand durch den Obergurt wird eine direkte Einleitung der Masse/Gewichtskraft in die Rahmenkonstruktion erreicht. Damit unterscheidet sich diese Ausführungsform von bekannten Coil-Aufliegern, bei denen die Last bzw. Kraft in eine Coilmulde, die nicht der Obergurt ist und welche seitlich in bzw. zwischen die Hauptträger eingespannt ist, eingeleitet wird.

Durch die erfindungsgemäße zumindest bereichsweise integrale Ausbildung von Aufnahmemuldenseitenwand und Obergurt des Rahmenlängsträgers ergibt sich ein optimierter Kraftfluss und eine enorme Betriebsfestigkeit.

Beispielsweise stehen die Obergurte der Rahmenlängsträger ca. 50 mm über die seitlichen Trittflächen, i.e. der Laderaumboden, hinaus. Durch Verbreiterung der betreffenden Obergurte ist es möglich, die Aufnahmemuldenseitenwände ausgeprägter über den Laderaumboden / Trittbereich hinausragen zu lassen. Dadurch kann ein Coil mit größerem Durchmesser optimiert geladen und dabei geführt werden. Der auskragende Überstand ist vergrößert und der Coil mit größerem Durchmesser (z.B. Papiercoil) liegt auf diesen Obergurten auf. Die Gewichtskraft wird direkt in den Fahrzeugrahmen, insbesondere die Rahmenhauptlängsträger, eingeleitet. Mithin liegt der Coil nicht auf dem Aufnahmemuldenboden auf, sondern auf den Aufnahmemuldenseitenwänden (insbesondere dem Obergurt). Die Kräfte werden somit in den Fahrzeugrahmen und gerade nicht ausschließlich in den Coilmuldenboden eingeleitet.

Bevorzugt ist der Obergurt mit dem Steg des Rahmenlängsträgers verschweißt. Eine derartige einteilige Ausführung der Längsträger mit der Aufnahmemuldenseitenwand stellt infolge der schweißtechnisch durchgängig verbundenen Bauteile eine hinsichtlich der Betriebsfestigkeit erheblich optimierte Ausgestaltung dar. Daraus resultierend können die Materialstärken bzw. Materialquerschnitte umfangreich reduziert werden. Als Folge kann eine Gewichtsersparnis, eine Erhöhung des Ladungsgewichtes ohne Überschreitung des zulässigen Gesamtgewichtes und eine Kraftstoffeinsparung erzielt werden.

Bevorzugt wird an den Obergurt nach unten eine Aufnahmemuldenseitenwandverlängerung angebracht. Die Aufnahmemuldenseitenwandverlängerung kann beispielsweise an den Obergurt angeschweißt sein. Alternativ kann sie auch mit einer lösbaren Verbindung mit dem Obergurt verbunden sein. Der Obergurt sowie die Verlängerung sind bevorzugt gekantet. Dadurch entsteht ein Aufnahmebereich für beispielsweise Siebdruckplatten, welche in die Aufnahmemuldenseitenwand einlegbar sind. Entsprechend umfasst die Aufnahmemuldenseitenwand den Obergurt im oberen Bereich und eine Aufnahmemuldenseitenwandverlängerung im unteren Bereich. An den Obergurt kann schräg nach oben eine weitere Aufnahmemuldenseitenwandverlängerung angebracht, beispielsweise angeschweißt, sein, durch die die Aufnahmemuldenseitenwand nach oben verlängert wird.

Bevorzugt erstreckt sich die Aufnahmemulde in Längsrichtung des Nutzfahrzeugs, d.h. von einem vorderen Bereich des Nutzfahrzeugs zu einem hinteren Bereich des Nutzfahrzeugs. Die Aufnahmemuldenseitenwände können dann als eine linke und eine rechte Aufnahmemuldenseitenwand bezeichnet werden. Die linke Aufnahmemuldenseitenwand erstreckt sich in Querrichtung schräg nach links-oben und die rechte Aufnahmemuldenseitenwand erstreckt sich in Querrichtung schräg nach rechts-oben.

Bevorzugt erstecken sich die linke und rechte Aufnahmemuldenseitenwand von dem Vorderende bis zu einem Hinterende des Laderaums. Die Aufnahmemulde kann sich aber auch nur über einen Teilbereich zwischen dem Vorderende und einem Hinterende des Laderaums erstrecken.

Bevorzugt ist die Aufnahmemulde mit einem Aufnahmemuldenboden, der zwischen den beiden Aufnahmemuldenseitenwänden liegt, ausgeführt. Alternativ kann die Aufnahmemulde ohne Boden ausgebildet sein oder können die zwei Aufnahmemuldenseitenwände auch direkt miteinander verbunden sein. Entsprechend kann die Aufnahmemulde eine spitze bzw. dreieckförmige Ausgestaltung aufweisen. Bevorzugt ist der Aufnahmemuldenboden mit der Aufnahmemuldenseitenwand verschweißt oder einstückig ausgeführt. Der Aufnahmemuldenboden kann aber auch lösbar mit der Aufnahmemuldenseitenwand, beispielsweise mit einer Steckverbindung, verbunden sein.

Die Geometrie der Aufnahmemulde ist so gewählt, dass das zu transportierende Coil bei der Ablage in der Aufnahmemulde an den beiden Aufnahmemuldenseitenwänden anliegt. Durch das Anliegen des Coils an den Aufnahmemuldenseitenwänden wird ein Formschluss erreicht.

Um ausreichend gegen Lageveränderungen gesichert zu sein, kann das Ladegut zusätzlich mit Zurrgurten niedergezurrt werden. Die Zurrgurte sind dazu beispielsweise an in Längsrichtung verteilten Befestigungshaken, Zurrbügeln, Zurrösen, Transportringen, Zurrhaken, Zurrschienen befestigt. Durch das Niederzurren wird ein Kraftschluss erreicht. Zur Erhöhung des Kraftschlusses können zusätzlich reibwerterhöhende Materialien z. B. Siebdruckplatten, Antirutschmatten, Antirutschbeschichtung eingesetzt werden. Für eine Aufnahme von beispielsweise einer Siebdruckplatte können Kantungen in der Aufnahmemuldenseitenwand vorgesehen sein, die einen Aufnahmebereich für die Siebdruckplatten ausbilden.

Die Aufnahmemulde ist vorzugsweise derart positioniert, dass eine optimale Gewichtsverteilung direkt zwischen den Rädern und oberhalb des jeweiligen Achsaggregats / Achskörpers erreicht wird. Diesbezüglich erfährt die zulässige Achsaggregatlast sowie die Sattellast/Stützlast Berücksichtigung.

Durch die erfindungsgemäße Aufnahmemulde kann die Stabilität der gesamten Fahrzeugkonstruktion sowie die Betriebsfestigkeit erhöht werden.

Die Aufnahmemulde ist vorzugsweise mit dem Laderaumboden verschweißt.

Seitlich kann eine Aufstiegsleiter für einen vereinfachten Einstieg in den Laderaum sowie auf die vorgesehene Trittfläche / Laderaumboden an dem Nutzfahrzeug angebracht sein. Zur Erhöhung der Verkehrssicherheit kann diese Aufstiegsleiter jeweils zum Verkehr abgewandten Fahrzeugseite angebracht werden.

Gemäß einer bevorzugten Ausführungsform ist das Nutzfahrzeug ein Lastkraftwagenanhänger und weist ein vorderes Rahmenmodul und ein Hauptrahmenmodul mit einem Vorder- und einem Hinterende auf. An dem Vorderende ist das vordere Rahmenmodul angebracht. Die zwei Rahmenlängsträger erstrecken sich von dem Vorderende bis zu dem Hinterende mit einem Abstand in Querrichtung zueinander und zwischen den beiden Rahmenlängsträgern befindet sich die Aufnahmemulde. Die zwei Aufnahmemuldenseitenwände sind eine linke und eine rechte Aufnahmemuldenseitenwand. Die linke Aufnahmemuldenseitenwand erstreckt sich in Querrichtung schräg nach links-oben und die rechte Aufnahmemuldenseitenwand erstreckt sich in Querrichtung schräg nach rechts-oben. Die linke und rechte Aufnahmemuldenseitenwand steht nach oben über den Laderaumboden mit dem Überstand über. Die zwei Aufnahmemuldenseitenwände sind, zumindest bereichsweise, jeweils durch einen Obergurt der beiden Rahmenlängsträger ausgebildet.

Gemäß einer bevorzugten Ausführungsform ragen die Aufnahmemuldenseitenwände in vertikaler Richtung gemessen in Abhängigkeit der Coilgröße mit einem Überstand im Bereich von vorzugsweise ca. 1 mm bis ca. 400 mm, weiter vorzugsweise im Bereich von ca. 10 mm bis ca. 200 mm, weiter vorzugsweise im Bereich von ca. 20 mm bis ca. 100 mm, weiter vorzugsweise im Bereich von ca. 30 mm bis ca. 60 mm über den Laderaumboden hinaus.

Eine Ausführung der Aufnahmemulde mit einem derartigen Übermaß stellt eine zuverlässige Führung des Coils bei der Beladung dar. Ferner wird sichergestellt, dass die durch das Coil auf das Nutzfahrzeug einwirkenden Kräfte unmittelbar in den Rahmen eingeleitet werden und andere Bauteile, wie etwa der Laderaumboden, durch die überstehenden Aufnahmemuldenseitenwände geschützt werden.

Gemäß einer bevorzugten Ausführungsform weist die Aufnahmemulde Einsetzlöcher auf, die in Längsachsenrichtung ausgerichtet und dazu ausgebildet sind, Verstrebungen aufzunehmen.

Die Einsetzlöcher sind dazu ausgebildet, dass Streben vorzugsweise vertikal in sie eingesteckt werden können. Durch diese Streben kann innerhalb des Laderaums eine Anlage nebst formschlüssiger Ladungssicherung für das Coil geschaffen werden.

Gemäß einer weiteren, bevorzugten Ausführungsform weisen die Aufnahmemuldenseitenwände jeweils einen lösbaren Abschnitt auf, der sich zumindest teilweise über dem Laderaumboden befindet.

Mithilfe des lösbaren Abschnitts an den zwei Aufnahmemuldenseitenwänden beziehungsweise an der linken und der rechten Aufnahmemuldenseitenwand, wird ein Auswechseln oder ein Nachrüsten nur dieses lösbaren Abschnitts als ein Verschleißbauteil oder Nachrüstbauteil ermöglicht, ohne die gesamte Aufnahmemulde austauschen zu müssen. Der lösbare Abschnitt ist beispielsweise in Form einer Steckverbindung, Schraubverbindung oder anderen lösbaren Verbindungsoption ausgeführt.

Gemäß einer bevorzugten Ausführungsform weist das Nutzfahrzeug ferner einen Nutzfahrzeugaufbau, der eine Laderaumabdeckung umfasst, die sich von dem Vorderende bis zu dem Hinterende des Laderaums und sich in Querrichtung von einem linksseitigen Randbereich bis zu einem rechtsseitigen Randbereich des Laderaums erstreckt, auf.

Durch den Nutzfahrzeugaufbau kann das zu transportierende Coil gegen Einflüsse von außen geschützt werden.

Gemäß einer bevorzugten Ausführungsform ist der Nutzfahrzeugaufbau ein erfindungsgemäßer Nutzfahrzeugaufbau gemäß dem obigen Aspekt.

Durch die Verwendung eines erfindungsgemäßen Nutzfahrzeugaufbaus können die oben dargestellten Vorteile des Nutzfahrzeugaufbaus für das erfindungsgemäße Nutzfahrzeug genutzt werden.

Gemäß einer bevorzugten Ausführungsform des Nutzfahrzeugs wird ein Lastkraftwagenanhänger verwendet, der als vorderes Rahmenmodul ein bogenförmiges Fahrzeugrahmenfrontmodul, wie es aus der EP 2 886 424 B1 bekannt ist, verwendet. Ein derartiges Fahrzeugrahmenfrontmodul weist auf: einen einem Zugfahrzeug zugewandten vorderen Bereich, einen vom Zugfahrzeug abgewandten hinteren Bereich, einen ersten vertikalen Steg mit einem ersten geraden Bereich und einem ersten bogenförmigen Bereich, und einen zweiten vertikalen Steg mit einem zweiten geraden Bereich und einem zweiten bogenförmigen Bereich. Der erste bogenförmige Bereich und der zweite bogenförmige Bereich sind miteinander verbunden. Der erste gerade Bereich und der zweite gerade Bereich verlaufen in einer Richtung vom vorderen Bereich zum hinteren Bereich divergierend. Der erste vertikale Steg und der zweite vertikale Steg sind jeweils mit einem der zwei Längsträger des Hauptrahmenmoduls verbunden.

### Kurze Beschreibung der Zeichnungen

Fig. 1 ist eine perspektivische Ansicht auf eine beispielhafte Ausfiihrungsform eines Nutzfahrzeugaufbaus gemäß der vorliegenden Erfindung.
Fig. 2 ist eine weitere perspektivische Ansicht auf den in Fig. 1 gezeigten Nutzfahrzeugaufbau.
Fig. 3 ist eine Rückseitenansicht auf den in Fig. 1 gezeigten Nutzfahrzeugaufbau.
Fig. 4 ist eine perspektivische Ansicht auf eine beispielhafte Ausführungsform eines Lastkraftwagenanhängers gemäß der vorliegenden Erfindung.
Fig. 5 ist eine perspektivische Ansicht auf eine Aufnahmemulde der in Fig. 4 gezeigten Lastkraftwagenanhängers.
Fig. 6 ist eine Schnittansicht entlang des in Fig. 5 gezeigten Schnittes A-A.

### Detaillierte Beschreibung

Als vorne-hinten Richtung wird im Folgenden die Längsachsenrichtung des Nutzfahrzeugs bezeichnet.

Als links-rechts Richtung wird im Folgenden die Querrichtung des Nutzfahrzeugs bezeichnet.

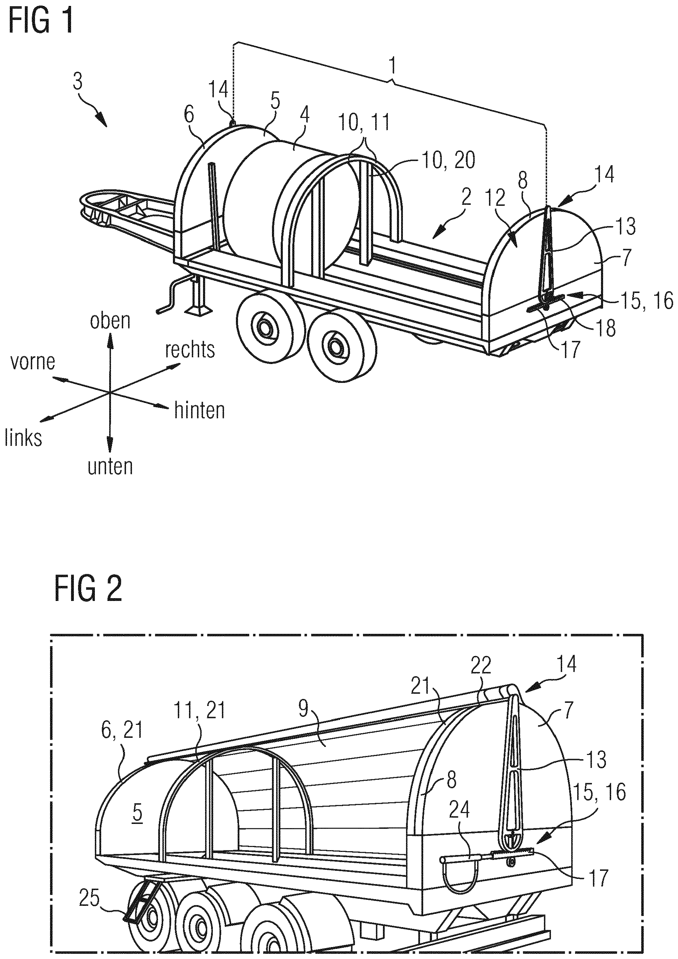

Fig. 1 ist eine perspektivische Ansicht auf eine beispielhafte Ausführungsform eines Nutzfahrzeugaufbaus 1 gemäß der vorliegenden Erfindung. Der Nutzfahrzeugaufbau 1 ist in diesem Fall der Aufbau eines Lastkraftwagenanhängers 3. Im vorderen Bereich des Lastkraftwagenanhängers 3 befindet sich eine Stirnwand 5, die einen bogenförmigen Randbereich 6 aufweist. Im hinteren Bereich des Lastkraftwagenanhängers 3 befindet sich eine Heckwand 7 mit dem bogenförmigen Randbereich 8. Zwischen der Stirnwand 5 und der Heckwand 7 befindet sich der Laderaum 2. In dem Laderaum 2 befindet sich ein Coil 4. Zwischen der Stirnwand 5 und der Heckwand 7 befindet sich ferner eine Verstrebung 10. Die Verstrebung 10 weist im Randbereich bogenförmige Streben 11 auf. Ferner weist die Verstrebung 10 vertikale Streben 20, die sich von dem Boden des Laderaums 2 vertikal durch den Laderaum 2 nach oben erstrecken, auf. Vor der Stirnwand 5 und hinter der Heckwand 7 befindet sich ein Schwenkarm 13. Der Schwenkarm 13 ist im Bereich des Schwenkarmkopfbereichs 15 drehbar gelagert und mit einem Zahnstangenantrieb verbunden. Der Zahnstangenantrieb umfasst eine Zahnstange 17 und ein integral mit dem Schwenkarm 13 ausgeführtes halbes Zahnrad 18. Die Zahnstange 17 kann beispielsweise mit einem Hydraulikzylinder 24 (in der Fig. 1 nicht gezeigt) hin- und herbewegt werden. Das Schwenkarmende 14 des Schwenkarms 13 ragt über den bogenförmigen Randbereich 6 der Stirnwand 5 beziehungsweise den bogenförmigen Randbereich 8 der Heckwand 7 heraus. Eine den Laderaum 2 abdeckende bewegliche Abdeckung 9 ist in Fig. 1 nicht gezeigt.

Fig. 2 ist eine weitere perspektivische Ansicht auf den in Fig. 1 gezeigten Nutzfahrzeugaufbau. Im Unterschied zu Fig. 1 ist in Fig. 2 eine bewegliche Abdeckung 9 gezeigt. Die bewegliche Abdeckung 9 ist in ihrem Randbereich mit einer Stange 22 verbunden. Zwischen der Stange 22 und den bogenförmigen Randbereichen von Stirnwand 5, Heckwand 7 und Verstrebung 10 befinden sich Gleitstreifen 21. Die Gleitstreifen 21 befinden sich auf dem bogenförmigen Randbereich 6 der Stirnwand 5, dem bogenförmigen Randbereich 8 der Heckwand 7 und dem bogenförmigen Randbereich 11 der Verstrebung 10. Mit der Stange 22 sind die Schwenkarme 13 im Bereich der beiden Schwenkarmenden 14 verbunden. Die Zahnstange 17 ist mit einem Hydraulikzylinder 24 verbunden. Eine Aufstiegsleiter 25 befindet sich seitlich am Lastkraftwagenanhänger 3.

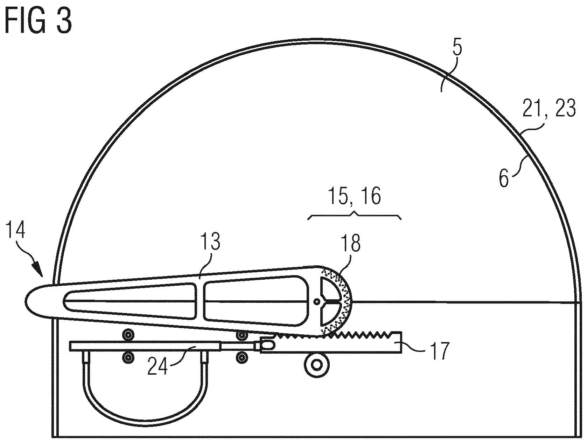

Fig. 3 ist eine Rückseitenansicht auf den in Fig. 1 gezeigten Nutzfahrzeugaufbaus 1. Vor der Stirnwand 5 befindet sich der Schwenkarm 13. Integral mit dem Schwenkarm 13 ist ein halbes Zahnrad 18 ausgeführt. Das halbe Zahnrad 18 greift in die Zahnstange 17 ein. Die Zahnstange 17 ist mit dem Hydraulikzylinder 24 verbunden. Durch Einfahren beziehungsweise Ausfahren des Hydraulikzylinders 24 kann der Schwenkarm 13 so gedreht werden, dass sich das Schwenkarmende 14 entlang des bogenförmigen Randbereichs 6 bewegt. Auf dem bogenförmigen Randbereich 6 befindet sich ein Gleitstreifen 21. Alternativ oder zusätzlich zu dem Gleitstreifen 21 kann sich auf dem bogenförmigen Randbereich 6 auch eine Führungsschiene 23 befinden. Alternativ oder zusätzlich zu dem Gleitstreifen 21 und/oder der Führungsschiene 23 kann sich entlang des bogenförmigen Bereichs auch eine Seil- oder Kettenführung befinden.

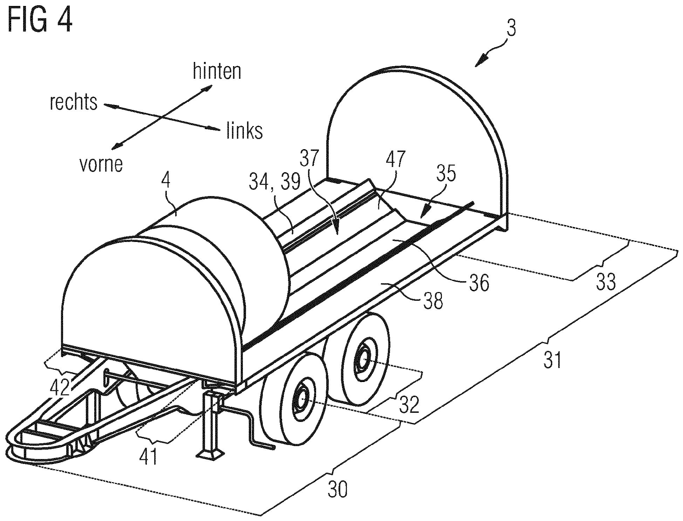

Fig. 4 ist eine perspektivische Ansicht auf eine beispielhafte Ausfiihrungsform eines Lastkraftwagenanhängers 3 gemäß der vorliegenden Erfindung. Fig. 4 zeigt einen Lastkraftwagenanhänger 3 mit einem vorderen Rahmenmodul 30 und einem Hauptrahmenmodul 31. Auf dem Lastkraftwagenanhänger 3 befindet sich ein Coil 4, welches in einer Aufnahmemulde 35 abgelegt ist. Die Aufnahmemulde 35 verläuft von dem Vorderende 32 des Hauptrahmenmoduls 31 bis zu dem Hinterende 33 des Hauptrahmenmoduls 31. Die Aufnahmemulde 35 verläuft zwischen zwei Längsträgern 34, wobei die schräg gestellten Obergurte 39 dieser Längsträger 34 über den Laderaumboden 38 hinausragen und einen Überstand darstellen. Die Aufnahmemulde 35 hat in Querrichtung betrachtet mittig einen Aufnahmemuldenboden 36. Alternativ kann die Aufnahmemulde auch ohne Aufnahmemuldenboden 36 spitz zusammenlaufen. Rechts und links von diesem Aufnahmemuldenboden 36 erstrecken sich zwei Aufnahmemuldenseitenwände 37 schräg nach oben. Die zwei Aufnahmemuldenseitenwände 37 umfassen eine sich bis zu dem Obergurt 39 erstreckende Aufnahmemuldenseitenwandverlängerung 47 und den Obergurt 39. Der Obergurt 39 ist also Bestandteil der Aufnahmemuldenseitenwand 37. Der Obergurt 39 ragt über den Laderaumboden (die Trittfläche) 38 hinaus. Dadurch ergibt sich von dem Vorderende 32 bis zu dem Hinterende 33 des Hauptrahmenmoduls 31 ein auskragender Überstand einer rechten und einer linken Aufnahmemuldenseitenwand 37. Eine Laderaumabdeckung (in der Fig. 4 nicht gezeigt) kann sich von dem Vorderende 32 bis zu einem Hinterende 33 des Laderaums 2 und in Querrichtung von einem linksseitigen Randbereich 41 bis zu einem rechtsseitigen Randbereich 42 des Laderaums 2 erstrecken.

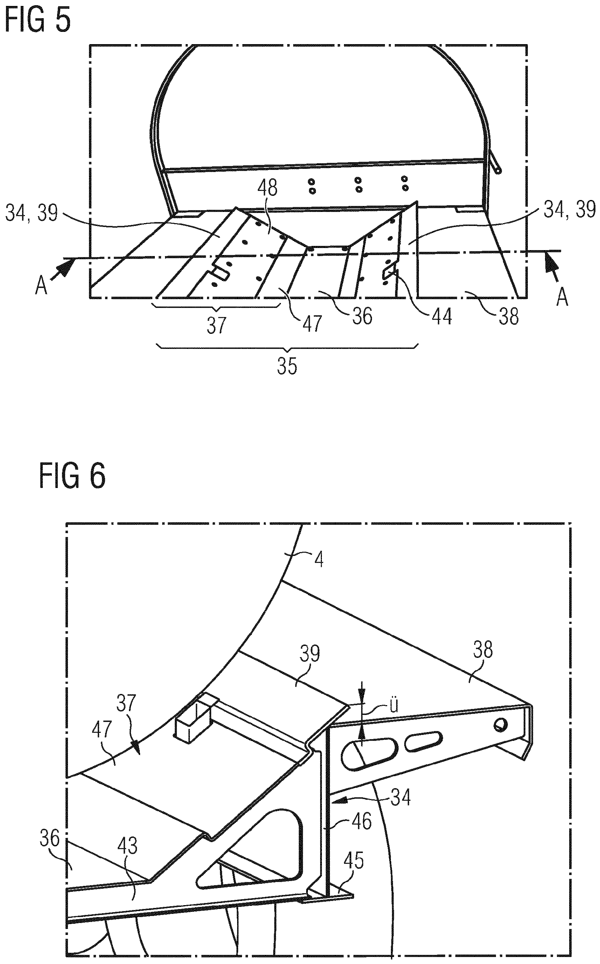

Fig. 5 ist eine perspektivische Ansicht auf die Aufnahmemulde 35 des in Fig. 4 gezeigten Lastkraftwagenanhängers. Der Aufnahmemuldenboden 36 liegt gegenüber dem Laderaumboden 38 vertieft. Die Obergurte 39 der Rahmenlängsträger 34 bilden den oberen Bereich der Aufnahmemuldenseitenwände 37 aus. Ferner umfassen die Aufnahmemuldenseitenwände 37 eine Aufnahmemuldenseitenwandverlängerung 47, welche den Obergurt 39 mit dem Aufnahmemuldenboden 36 verbindet. Die Aufnahmemuldenseitenwand 37 umfasst somit den Obergurt 39 und die Aufnahmemuldenseitenwandverlängerung 37. Die Obergurte 39 stehen über den Laderaumboden 38 schräg nach oben hervor. Die Aufnahmemuldenseitenwände 37 weisen Einsetzlöcher 44 auf. Die Einsetzlöcher 44 sind derart ausgebildet, dass Streben senkrecht in sie eingesteckt werden können. In Fig. 5 ist eine Einlegeplatte 48, wie beispielsweise eine Siebdruckplatte gezeigt, die in die Aufnahmemuldenseitenwand 37 eingelegt ist (in Fig. 4 ist keine Einlegeplatte gezeigt).

Fig. 6 ist eine Schnittansicht entlang des Schnittes A-A in der Fig. 5. Der Rahmenlängsträger 34 weist einen Obergurt 39 und einen Untergurt 45 auf. Der Obergurt 39 und der Untergurt 45 sind mit dem Steg 46 des Rahmenlängsträgers 34 verschweißt. Der Obergurt 39 ist schräg mit dem Rahmenlängsträgersteg 34 verschweißt und bildet einen Teil der (ebenfalls schrägen) Aufnahmemuldenseitenwand 37 aus. Die Aufnahmemuldenseitenwand 37 ist somit bereichsweise durch den Obergurt 39 ausgebildet. Der Obergurt 39 ragt in Richtung nach schräg oben über den Laderaumboden 38 mit dem Überstand Ü hinaus. In Richtung schräg nach unten ist der Obergurt 39 gekantet. Weiter in Richtung schräg nach unten ist an den Obergurt 39 eine Aufnahmemuldenseitenwandverlängerung 47 angeschweißt. Die Aufnahmemuldenseitenwandverlängerung 47 ist ebenfalls gekantet und ist am unteren Ende mit dem Aufnahmemuldenboden 36 verbunden. Durch die Kantung in dem Obergurt 39 und in der Aufnahmemuldenseitenwandverlängerung 47 wird ein Aufnahmebereich für eine Einlegeplatte, wie beispielsweise eine Siebdruckplatte geschaffen. Ein Coil 4 liegt auf der Aufnahmemuldenseitenwand 37 auf. Die Aufnahmemuldenseitenwand 37 und der Aufnahmemuldenboden 36 sind auf den Querträgern 43, die in regelmäßigen Abständen von vorne nach hinten angeordnet sind, abgestützt.

### Gewerbliche Anwendbarkeit

Mit einem erfindungsgemäßen Nutzfahrzeugaufbau und einem erfindungsgemäßen Lastkraftwagenanhänger lassen sich die bekannten Transportmöglichkeiten von Coils mit Nutzfahrzeugen wirtschaftlicher gestalten.

Mit dem erfindungsgemäßen Nutzfahrzeugaufbau ist es möglich, das Gewicht im Vergleich zu den bekannten Nutzfahrzeugaufbauten, die bei dem Transport von Coils eingesetzt werden, erheblich zu reduzieren. Es lassen sich bei gleichem Gesamtgewicht somit mehr Coils transportieren.

Ferner kann mit dem erfindungsgemäßen Nutzfahrzeugaufbau der Luftwiderstand des Aufbaus bei Transport im Vergleich zu den bekannten Aufbauten reduziert werden. Somit kann eine Einsparung von Kraftstoffaufwendungen erreicht werden.

Ferner kann mit dem erfindungsgemäßen Nutzfahrzeug eine Beschädigung des Nutzfahrzeugs bei dem Beladen mit einem Coil durch hervorstehende Aufnahmemuldenseitenwände reduziert werden. Dadurch können kostenaufwendige Reparaturen oder Neuanschaffungen vermieden werden.

Weiterhin wird durch die bogenförmige Abdeckung die Verkehrssicherheit in den Wintermonaten infolge einer ausbleibenden Schnee- und Eislast durchgängig gewährleistet, mithin existiert keine Schneelast bzw. Vereisung auf der bogenförmigen Laderaumabdeckung. Die Bauteilvielfalt ist gering und die Gefahr von dauerhaften Beschädigungen infolge eines freien Laderaumzugangs sinkt erheblich.

Mit dem erfindungsgemäßen Nutzfahrzeug wird eine Führung nebst optimierter Aufnahme des Coils bzw. unterschiedlicher Coilgrößen sowie eine verbesserte Krafteinleitung in die gesamte Fahrzeugkonstruktion durch die hervorstehenden Aufnahmemuldenseitenwände bei Einlegen des Coils in die Aufnahmemulde ermöglicht.

### Bezugszeichenliste

- 1: Nutzfahrzeugaufbau
- 2: Laderaums
- 3: Lastkraftwagenanhänger
- 4: Coil
- 5: Stirnwand
- 6: bogenförmiger Randbereich der Stirnwand
- 7: Heckwand
- 8: bogenförmiger Randbereich der Heckwand
- 9: bewegliche Abdeckung
- 10: Verstrebungen
- 11: bogenförmiger Randbereich der Verstrebungen
- 12: Verdecköffnungsvorrichtung
- 13: Schwenkarm
- 14: Schwenkarmende
- 15: Schwenkarmkopfbereich
- 16: Zahnstangenantrieb
- 17: Zahnstange
- 18: Zahnrad
- 20: Strebe
- 21: Gleitstreifen
- 22: versteifter Randbereich
- 23: Führungsschienen
- 24: Hydraulikzylinder
- 25: Aufstiegsleiter
- 30: vorderes Rahmenmodul
- 31: Hauptrahmenmodul
- 32: Vorderende
- 33: Hinterende
- 34: Rahmenlängsträger
- 35: Aufnahmemulde
- 36: Aufnahmemuldenboden
- 37: Aufnahmemuldenseitenwand
- 38: Laderaumboden
- 39: Obergurt
- 41: linksseitiger Randbereich
- 42: rechtsseitiger Randbereich
- 43: Querträger
- 44: Einsetzlöcher
- 45: Untergurt
- 46: Steg
- 47: Aufnahmemuldenseitenwandverlängerung
- 48: Einlegeplatte
- A: geschlossener Zustand
- B: offener Zustand
- Ü: Überstand

## Patentansprüche

1. Nutzfahrzeugaufbau (1) zum Bedecken eines Laderaums (2) eines Nutzfahrzeugs (3) wie beispielsweise ein Lastkraftwagenanhänger (3), das zum Transportieren wenigstens eines Coils (4) ausgebildet ist, mit:
- einer Stirnwand (5), die einen bogenförmigen Randbereich (6) aufweist,
- einer Heckwand (7), die in Längsachsenrichtung des Nutzfahrzeugaufbaus (1) in einem Abstand zu der Stirnwand (5) angeordnet ist und einen eine ähnliche Bogenform wie die Stirnwand (5) aufweisenden bogenförmigen Randbereich (8) aufweist,
- eine bewegliche Abdeckung (9), die sich von der Stirnwand (5) bis zu der Heckwand (7) erstreckt und entlang der bogenförmigen Randbereiche (6, 8) führbar ist, und
- einer Verdecköffnungsvorrichtung (12), die dazu ausgebildet ist, die bewegliche Abdeckung (9) von einem geschlossenen Zustand (A), bei dem der Laderaum (2) durch die bewegliche Abdeckung (9) abgedeckt ist, in einen offenen Zustand (B), bei dem das wenigstens eine Coil (4) in und aus dem Laderaum (2) bringbar ist, entlang der bogenförmigen Randbereiche (6, 8) zu bewegen.

2. Nutzfahrzeugaufbau (1) nach Anspruch 1, ferner mit:
- wenigstens einer Verstrebung (10), die in einem Abstand zwischen der Stirnwand (5) und der Heckwand (7) angeordnet ist und einen bogenförmigen Randbereich (11), der eine ähnliche Bogenform wie die Stirn- (5) und/oder die Heckwand (7) aufweist und entlang dem die bewegliche Abdeckung (9) zusätzlich abgestützt ist, aufweist.

3. Nutzfahrzeugaufbau (1) nach Anspruch 2, bei dem die wenigstens eine Verstrebung (10) eine sich derart in den Laderaum erstreckende Strebe (20) aufweist, dass diese innerhalb des Laderaums (2) eine Anlage für das wenigstens eine Coil (4) schafft.

4. Nutzfahrzeugaufbau (1) nach einem der vorangehenden Ansprüche, bei dem die Verdecköffnungsvorrichtung (12) aufweist:
- einen Schwenkarm (13), der an einem Schwenkarmende (14) mit der beweglichen Abdeckung (9) verbindbar und an einem Schwenkarmkopfbereich (15) drehbar gelagert ist, und
- einen Antrieb (16), der mit dem Schwenkarmkopfbereich (15) verbunden und dazu ausgebildet ist, den Schwenkarm (13) zu drehen und durch die Drehung die bewegliche Abdeckung (9) zwischen dem geschlossenen Zustand (A) und dem offenen Zustand (B) hin- und herzubewegen,
wobei die Verdecköffnungsvorrichtung (12) einen Schwenkarm (13) und einen Antrieb (16) im Bereich der Stirnwand (5) und/oder im Bereich der Heckwand (7) aufweist und das Schwenkarmende (14) sich bei Drehung des Schwenkarms (13) entlang des bogenförmigen Randbereichs (6, 8) bewegt.

5. Nutzfahrzeugaufbau (1) nach Anspruch 4, bei dem der Antrieb (16) der Verdecköffnungsvorrichtung (12) ein Zahnstangenantrieb (16) ist, der durch lineares Verschieben einer Zahnstange (17) über ein mit dem Schwenkarm (13) verbundenes Zahnrad (18) die Drehung des Schwenkarms (13) erzeugt oder bei dem der Antrieb ein Schnecken- oder Kegelradgetriebe aufweist.

6. Nutzfahrzeugaufbau (1) nach einem der vorangehenden Ansprüche, bei dem
- die bewegliche Abdeckung (9) einen versteiften Randbereich (22), der mit der Verdecköffnungsvorrichtung (12) verbunden ist, aufweist, und
- die Stirnwand (5) und die Heckwand (7) entlang der bogenförmigen Randbereiche (6, 8) aufweisen:
a) einen Gleitstreifen (21), der dazu ausgebildet ist, dass der versteifte Randbereich (22) der beweglichen Abdeckung (9) darauf gleitbar ist und/oder
b) eine Führungsschiene (23), die dazu ausgebildet ist, dass der versteifte Randbereich (22) der beweglichen Abdeckung (9) darauf führbar ist und/oder
c) eine Seil- oder Kettenführung, die dazu ausgebildet ist, die bewegliche Abdeckung (9) entlang der bogenförmigen Randbereiche (6, 8) zu führen.

7. Nutzfahrzeugaufbau (1) nach Anspruch 6, bei dem ferner die wenigstens eine Verstrebung (10) entlang des bogenförmigen Randbereichs (11) einen Gleitstreifen (21) und/oder eine Führungsschiene (23) und/oder eine Seil- oder Kettenführung aufweist.

8. Nutzfahrzeug (3) mit einem Laderaum (2), das zum Transportieren wenigstens eines Coils (4) ausgebildet ist, mit:
- einer im Bereich eines Laderaumbodens (38) angeordneten Aufnahmemulde (35) mit zwei Aufnahmemuldenseitenwänden (37), wobei
a) sich die Aufnahmemuldenseitenwände (37) schräg nach oben, in entgegengesetzter horizontaler Richtung erstrecken und
b) die Aufnahmemuldenseitenwände (37) nach oben über den Laderaumboden (38) des Laderaums (2) mit einem Überstand (Ü) überstehen.

9. Nutzfahrzeug (3) nach Anspruch 8, bei dem die Aufnahmemuldenseitenwand (37), zumindest bereichsweise, durch einen Obergurt (39) eines Rahmenlängsträgers (34) des Nutzfahrzeugs (3) ausgebildet ist.

10. Nutzfahrzeug (3) nach einem der Ansprüche 8 oder 9, bei dem das Nutzfahrzeug ein Lastkraftwagenanhänger (3) ist und ferner aufweist:
- ein vorderes Rahmenmodul (30), und
- ein Hauptrahmenmodul (31) mit einem Vorder- (32) und einem Hinterende (33), wobei
a) an dem Vorderende (32) das vordere Rahmenmodul (30) angebracht ist,
b) sich zwei Rahmenlängsträger (34) von dem Vorderende (32) bis zu dem Hinterende (33) mit einem Abstand in Querrichtung zueinander erstrecken, und
c) sich zwischen den beiden Rahmenlängsträgern (34) die Aufnahmemulde (35) befindet, wobei
i) die zwei Aufnahmemuldenseitenwände (37) eine linke und eine rechte Aufnahmemuldenseitenwand (37) sind,
ii) sich die linke Aufnahmemuldenseitenwand (37) in Querrichtung schräg nach links-oben erstreckt und sich die rechte Aufnahmemuldenseitenwand (37) in Querrichtung schräg nach rechts-oben erstreckt,
iii) die linke und rechte Aufnahmemuldenseitenwand (37) nach oben über den Laderaumboden (38) mit dem Überstand (Ü) überstehen, und
iv) die zwei Aufnahmemuldenseitenwände (37), zumindest bereichsweise, jeweils durch einen Obergurt (39) der beiden Rahmenlängsträger (34) ausgebildet ist.

11. Nutzfahrzeug (3) nach einem der Ansprüche 8 bis 10, bei dem die Aufnahmemuldenseitenwände (30) in vertikaler Richtung gemessen mit einem Überstand (Ü) im Bereich von vorzugsweise ca. 1 mm bis ca. 400 mm, weiter vorzugsweise im Bereich von ca. 10 mm bis ca. 200 mm, weiter vorzugsweise im Bereich von ca. 20 mm bis ca. 100 mm, weiter vorzugsweise im Bereich von ca. 30 mm bis ca. 60 mm hinausragen.

12. Nutzfahrzeug (3) nach einem der Ansprüche 8 bis 11, bei dem die Aufnahmemulde (35) Einsetzlöcher (44) aufweist, die in Längsachsenrichtung ausgerichtet und dazu ausgebildet sind, Verstrebungen (10) aufzunehmen.

13. Nutzfahrzeug (3) nach einem der Ansprüche 8 bis 12, bei dem die Aufnahmemuldenseitenwände (37) jeweils einen lösbaren Abschnitt aufweisen, der sich zumindest teilweise über dem Laderaumboden (31) befindet.

14. Nutzfahrzeug (3) nach einem der Ansprüche 8 bis 13, ferner mit einem Nutzfahrzeugaufbau (1), der eine Laderaumabdeckung umfasst, die sich von dem Vorderende (32) bis zu dem Hinterende (33) des Laderaums (2) und sich in Querrichtung von einem linksseitigen Randbereich (41) bis zu einem rechtsseitigen Randbereich (42) des Laderaums (2) erstreckt.

15. Nutzfahrzeug (3) nach Anspruch 14, bei dem der Nutzfahrzeugaufbau (1) ein Nutzfahrzeugaufbau (1) gemäß einem der Ansprüche 1 bis 7 ist.
